# EUROPEAN PATENT SPECIFICATION

(11) **EP 0 878 644 B1**
(45) Date of publication and mention of the grant of the patent: **07.08.2002**
(21) Application number: 97500086.0
(22) Date of filing: 13.05.1997
(51) Int. Cl.: F16H 57/02, H02K 7/116, H02K 15/14, H02K 5/15, F16L 23/032

(54) **Multiple diameter flange**
Multi-Diameter Flansch
Flasque adaptable à plusieurs diamètres

(43) Date of publication of application: 18.11.1998
(73) Proprietor: Cunat Martinez, Vicente, 46560 Masalfasar (Valencia) (ES)
(72) Inventor: Cunat Martinez, Vicente, 46560 Masalfasar (Valencia) (ES)
(74) Representative: Flaccus, Rolf-Dieter, Dr.

(56) References cited:
- WO-A-93/13346
- DE-A- 4 300 916
- US-A- 5 186 757
- CANNON D: "MATING MOTORS AND GEARHEADS" MACHINE DESIGN, vol. 64, no. 3, pages 50-52, 54, XP000294610

## Description

### OBJECT

The object to which the invention protected by the present Patent of Invention relates consists of a "multiple diameter flange" applicable for coupling between the casings of a motor and any mechanical member whatsoever driven thereby, such as a reduction gear for instance.

### BACKGROUND

Reduction gears are mechanical members for transmitting turning movements between two shafts or axles, namely drive and driven shafts, thereby for the latter to turn at a lesser speed without the rating of the former being altered.

Among known reduction gears in which the speed reduction ratio remains constant, that which comprises a worm (connected to the drive shaft) and a cogwheel (connected to the driven shaft) is widely applied.

Indeed, reduction gears of this kind are applicable for operating machine tools, lifts, automatic doors, conveyor belts, compressors, and so on and so forth.

Understandably, so broad a range of applications results in very different operating power requirements that in turn condition the dimensional features of the flanges connecting the motor and reduction gear casings, for the flanging screws are subject to shear stresses proportional to the load torque transmitted.

In order to meet such a variable demand, flanges of different diameters have heretofore been used connected to the casing, and thus each housing has a flange of a given diameter screwed to it, making up series of a same casing with several flanges, in independent units.

This system entails serious economic drawbacks, such as due to the need to multiply the number of casting boxes for the various flanges; or the need to stock and hold an extensive range of products corresponding to the series of standard flanges.

A reduction gear according to the preamble of claim 1 is known from DE 4300916A1.

### DESCRIPTION OF THE INVENTION

The object of the invention subject of this Patent is to overcome the disadvantages typical of the known process of using flanges having different diameters, described hereinbefore, and the invention has thus been devised and designed with this object in mind.

This object is achieved by the combination of the features of independent claim 1.

The invention essentially lies in providing each housing with a flange having the largest standard diameter, solidly attached by being cast jointly with it.

The flanges (for drives or driven members) are provided on their opposed coupling faces with circumferential ribs whose diameters match those of standard flanges, thereby for a simple machining to allow the flanges to be left with the required diameter, by cutting along the groove lying between the rib of said diameter and the superior diameter rib.

The drive flange ribs fit in the grooves lying between the ribs of the driven member and help prevent slipping between each other.

The flanging screws may be housed in holes that are preferably arranged radially and spaced from each other at a 45° angle, all of the holes being initially blocked by a thin metallic layer in order that only those that belong to the required flange diameter may be completely perforated by simple punching.

The methodology of the invention described yields flanges that may with full rights be referred to as having a multiple diameter, given their versatility from the standpoint of the required diameter, which is convenient in sharply reducing the investment in flange casting boxes and the capital fixed in stocked products, for flange diversity is reduced and stock turnover is enhanced.

### BRIEF DESCRIPTION OF THE DRAWINGS

In order to complete the description of the invention and facilitate the interpretation of its formal, structural and functional characteristics, drawings are attached hereto schematically showing different features of a preferred embodiment of the multiple diameter flange subject of the present Patent of Invention.

In these drawings:

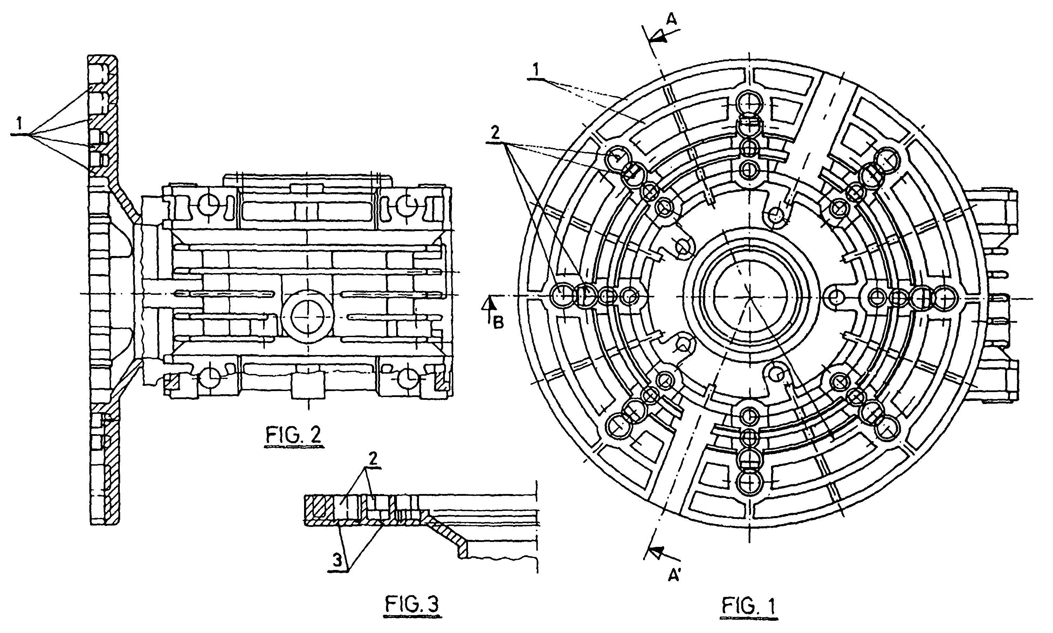

- Figure 1 is a front view of the multiple diameter flange;
- Figure 2 is a cross-section of the flange along planes A-A' as identified in Figure 1, spaced at an angular distance of 135°;
- Figure 3 is a cross-section of the flange along plane B, cutting across a radial alignment of the flanging screw holes, as identified in Figure 1.

### DESCRIPTION OF A PREFERRED EMBODIMENT

In order to clearly show the nature and scope of the advantageous application of the multiple diameter flange, which is the subject-matter of the invention, its structure and operation will now be described, with reference to the drawings which show a preferred embodiment of the said object for informative purposes and should therefore be taken in their broadest sense and not to limit the application and the contents of the invention.

The multiple diameter flange is characterised by being provided on its coupling face with circumferential ribs (1) whose diameters match the standard diameters of flanges, and thus a simple machining allows the flanges to be left with the required diameter, by cutting along the groove between the rib of such diameter and that of the superior diameter.

The flanging screws may be housed in holes (2) that are preferably arranged radially and spaced from each other at a 45° angle, all of the holes being initially blocked by a thin metallic layer (3) in order that only those that belong to the required flange diameter may be completely perforated by simple punching.

## Claims

1. A multiple diameter flange with a plurality of holes on its coupling surface for flanging screws, said holes being arranged in fixed positions on said flange **characterized by** being provided on its coupling face with
- circumferential ribs (1) whose diameters match the standard diameters of flanges, and
- circumferential grooves between said ribs, such that a flange having a required diameter may be obtained by cutting said multiple diameter flange along the groove between the rib of said required diameter and the rib of the superior diameters.

2. A multiple diameter flange in accordance with claim 1, **characterized in that** said holes are arranged in a radial alignment.

3. A multiple diameter flange in accordance with claim 1 or 2, **characterized in that** all of said holes or a subset of said holes are/is blocked by a metallic layer.

## Patentansprüche

1. Flansch mit multiplem Durchmesser, mit einer Mehrzahl von Löchern auf seiner Kupplungsfläche für Flanschschrauben, wobei die Löcher sich in festen Positionen auf dem Flansch befinden, **dadurch gekennzeichnet, daß** er auf seiner Kupplungsfläche aufweist:
- umlaufende Rippen, deren Durchmesser den Standard-Flanschdurchmessern entsprechen,
- umlaufende Schlitze zwischen diesen Rippen dergestalt, daß ein Flansch eines gewünschten Durchmessers erhalten werden kann, indem man den Flansch mit multiplem Durchmesser entlang dem Schlitz zwischen der Rippe des gewünschten Durchmessers und der Rippe des größeren Durchmessers schneidet.

2. Flansch mit multiplem Durchmesser nach Anspruch 1, **dadurch gekennzeichnet, daß** die Löcher in einer radialen Linie angeordnet sind.

3. Flansch mit multiplem Durchmesser nach Anspruch 1 oder 2, **dadurch gekennzeichnet, daß** alle diese Löcher oder eine Teilgruppe dieser Löcher durch eine Metallschicht blockiert sind/ist.

## Revendications

1. Flasque à diamètres multiples comportant une pluralité de trous sur sa surface d'accouplement pour insérer des vis, lesdits trous étant disposés à des positions fixes sur ladite flasque, **caractérisée en ce qu'**elle est munie sur sa face d'accouplement
- de nervures circonférentielles (1) dont les diamètres correspondent aux diamètres standard des flasques, et
- de gorges circonférentielles entre lesdites nervures, de sorte que l'on peut obtenir une flasque présentant un diamètre requis en découpant ladite flasque à diamètres multiples le long de la gorge entre la nervure dudit diamètre requis et la nervure du diamètre supérieur.

2. Flasque à diamètres multiples selon la revendication 1, **caractérisée en ce que** lesdits trous sont disposés selon un alignement radial.

3. Flasque à diamètres multiples selon la revendication 1 ou 2, **caractérisée en ce que** tous lesdits trous ou un sous-ensemble desdits trous sont/est bloqué(s) par une couche métallique.
